# FASCICULE DE BREVET EUROPEEN

(11) **EP 3 694 702 B1**
(45) Date de publication et mention de la délivrance du brevet: **01.12.2021**
(21) Numéro de dépôt: 18792976.5
(22) Date de dépôt: 01.10.2018
(51) Int. Cl.: B60C 9/20, B29D 30/16, B29D 30/30, B29D 30/70

(54) **ARMATURE DE SOMMET D'UN PNEUMATIQUE POUR VEHICULE AGRICOLE DE TYPE TRACTEUR**
KRONENVERSTÄRKUNG FÜR EINEN REIFEN EINES TRAKTORARTIGEN LANDWIRTSCHAFTLICHEN FAHRZEUGS
CROWN REINFORCEMENT FOR A TYRE OF A TRACTOR-TYPE AGRICULTURAL VEHICLE

(30) Priorité: 13.10.2017 FR 1759634
(43) Date de publication de la demande: 19.08.2020
(73) Titulaire: Compagnie Générale des Etablissements Michelin, 63000 Clermont-Ferrand (FR)
(72) Inventeur: BARRAT, Nicole, 63040 CLERMONT-FERRAND Cedex 9 (FR)
(74) Mandataire: Millanvois, Patrick Jacques Jean
(86) Numéro de dépôt international: PCT/FR2018/052402
(87) Numéro de publication internationale: WO 2019/073143

(56) Documents cités:
- EP-A1- 2 689 939
- EP-A1- 3 181 375
- EP-A1- 3 192 672
- FR-A1- 2 080 673

## Description

La présente invention a pour objet un pneumatique radial, destiné à équiper un véhicule lourd de type agricole, et concerne plus particulièrement l'armature de travail d'un tel pneumatique.

De tels pneumatiques pour véhicules agricoles sont destinés à être montés sur des jantes de 16 à 42 pouces. Leurs spécifications dimensionnelles sont accessibles dans des normes dédiées, comme par exemple, la norme ETRTO (European Tyre and Rim Technical Organisation). Bien que non limitée à ce type d'application, l'invention est plus particulièrement décrite pour un pneumatique radial de grande dimension, avec une largeur de section nominale comprise entre 320 mm et 650 mm, et un diamètre extérieur du pneumatique gonflé à sa pression nominale et monté sur sa jante compris entre 822 mm et 1913 mm.

Le pneumatique décrit dans l'invention est plus particulièrement destiné à équiper une gamme de tracteurs agricoles dont la puissance est comprise entre 80 CV et 200 CV. Il s'ensuit que la capacité de charge d'un tel pneumatique varie de 975 à 4125 kilogrammes pour une pression de gonflage nominale de 160 kPa. Par ailleurs, ce pneumatique doit pouvoir atteindre une vitesse de 65 km/h sur route.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour ce type de véhicule comprend habituellement au moins une couche de carcasse comprenant des renforts, enrobés par un matériau polymérique de type élastomère ou élastomérique appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts d'une couche de carcasse sont sensiblement parallèles entre eux et forment, avec la direction circonférentielle, un angle compris entre 85° et 95°.

L'armature de sommet d'un pneumatique radial pour véhicule lourd de type agricole comprend une superposition de couches de sommet s'étendant circonférentiellement, radialement à l'extérieur de l'armature de carcasse. Chaque couche de sommet est constituée de renforts textiles ou métalliques, parallèles entre eux et enrobés par un matériau polymérique de type élastomère ou mélange d'enrobage.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

Les couches de travail ont également pour fonction de conférer au pneumatique une rigidité ou poussée de dérive élevée, nécessaire de manière connue pour l'obtention d'un bon comportement routier sur véhicule automobile. D'autres performances sont également liées au fonctionnement mécanique des couches de travail, comme par exemple la résistance au roulement, l'endurance haute vitesse ou encore l'énergie de rupture (test de breaking energy).

Dans le domaine des pneumatiques pour véhicule agricole, les renforts des couches de travail peuvent être de type métallique comme l'acier ou de type textile comme le polyester téraphtalate (PET), le polyamide, l'aramide, ou encore la rayonne. La couche de travail est caractérisée par des paramètres géométriques et physiques qui déterminent son comportement mécanique. Ces paramètres sont, par exemple, l'épaisseur de la couche de travail qui est directement en lien avec le diamètre des renforts ou encore, la densité de renforts de la couche qui est le nombre de renforts dans une section de couche d'une largeur de 1 dm. La force de rupture du renfort est utilisée pour dimensionner la couche de travail vis-à-vis des sollicitations mécaniques subies.

L'homme de l'art doit parvenir à un compromis technique et économique sur la nature du renfort, son type d'assemblage, pour déterminer la couche composite optimale pour la conception du pneumatique. Dans la suite, on utilisera indifféremment le terme de renforts ou de câbles suivant le contexte.

Les câbles textiles en polyester ou en polyamide ont de façon un comportement thermosensible, ce qui signifie que leurs propriétés mécaniques évoluent significativement avec la température. La contraction standard est le retrait que subit un câble en polyester ou en polyamide sous une température de 180°C sous une prétension standard normalisée. Il existe un procédé de filage spécial, connu de l'homme de l'art, qui permet d'obtenir des câblés à haut module et basse contraction thermique (HMLS=High Modulus Low Shrinkage). La fabrication d'un pneumatique passe par une phase de cuisson à des températures de plus de 165°C. Il faut donc maîtriser ce paramètre pour limiter les effets non désirables de la contraction standard des renforts des couches composites pendant la cuisson du pneumatique.

Un câble textile se caractérise par :
- La nature du filé (polyamide ou nylon, aramide, polyester, rayonne)
- Le titre (en tex) qui est le poids en gramme de mille mètres de ce renfort;
- L'assemblage de constitution du câble qui est le nombre de torons assemblés;
- La torsion qui est le nombre de tours par mètre pour les torons et les retors ;
- La contraction standard qui concerne les câbles thermosensibles et qui correspond au taux de rétraction du câble dans des conditions de sollicitations standardisées.

Les propriétés physiques et mécaniques d'un câble textile couramment utilisées sont les suivantes:
- La ténacité (valeurs en cN/tex). Elle est évaluée en faisant le rapport de la force de rupture sur le titre du câble. Cette grandeur permet de pourvoir comparer la résistance de renforts différents en faisant abstraction de leur grosseur, donc de leur titre.
- Le module élastique qui correspond à la pente de la courbe de force-allongement en fonction de la déformation, dans sa partie linéaire en pied de courbe. L'endurance évaluée par des cycles dynamiques de compression, liée à la fatigue ;
- La contraction standard qui est en lien avec la déformation des flancs, ou encore la stabilité dimensionnelle ;
- L'adhésion qui traduit la capacité du câble à coller à l'élastomère d'enrobage.

La qualité de l'adhésion entre le mélange élastomérique d'enrobage et le renfort textile est déterminée par un test dans lequel on mesure la force nécessaire pour extraire des tronçons de câblés du mélange élastomérique d'enrobage vulcanisée. Cette force d'arrachement est mesurée en Newton par câble arraché.

L'armature de travail d'un pneumatique pour véhicule agricole est le plus souvent composée de couches de travail à renforts textiles, ce qui nécessite la présence d'une pluralité de couches de travail et généralement de plus de deux couches de travail, compte tenu du niveau des sollicitations mécaniques auxquelles est soumis le pneumatique.

L'utilisation de couches de travail à renforts métalliques permet généralement de réduire à deux le nombre de couches de travail nécessaire à la reprise des sollicitations mécaniques.

Lors de la fabrication du pneumatique, et en particulier lors de la fabrication de l'armature de travail, de façon classique, chaque couche de travail est enroulée individuellement autour d'un tambour de finition, radialement à l'extérieur de l'armature de carcasse. Une soudure de la couche de travail par recouvrement est opérée, en superposant une première extrémité circonférentielle de la couche de travail à une deuxième extrémité circonférentielle sur une longueur de recouvrement donnée. Mais le nombre important de couches de travail à renforts textiles conduit à des surépaisseurs locales dans la direction circonférentielle correspondant à chacune des soudures. Ces surépaisseurs dégradent non seulement l'uniformité du pneumatique, mais aussi sa tenue en endurance. La dégradation de l'uniformité du pneumatique se manifeste sur la tenue de route du véhicule qui peut s'avérer dangereuse. Les soudures conduisent à des surépaisseurs locales qui constituent des points de fragilité mécanique du pneumatique.

La dégradation de l'uniformité circonférentielle du pneumatique découle d'une répartition irrégulière de la masse du pneumatique autour de l'axe de rotation. Plus précisément, l'uniformité peut être au moins en partie caractérisée par un critère de faux-rond du pneumatique. Le faux-rond est la variation du rayon du pneumatique en millimètres mesurée perpendiculairement à l'axe de rotation sur la circonférence, à la surface de la bande de roulement, sans tenir compte de l'influence des rainures et autres creux situés sur la bande de roulement du pneumatique. Le faux-rond crête à crête (FRCL) correspond, sur un tour de roue, à la différence entre les valeurs maximales et minimales du faux rond mesuré. La norme ISO 13326 définit le principe de mesure des critères d'uniformité.

L'endurance est évaluée par un test de roulage du pneumatique qui est gonflé à sa pression nominale majorée de 1 bar, monté sur sa jante nominale et écrasé sur un volant animé d'une vitesse de rotation constante. Le pneumatique subit des cycles de chargement par paliers, à des niveaux de charge pouvant aller jusqu'au double de sa charge théorique maximale. Le test est réussi si la durée de vie du pneumatique est supérieure à une durée seuil, exprimée en heures et fixée à l'avance. Le document FR 2 080 673 A1 décrit un pneumatique pourvu d'une armature de travail constituée par un enroulement circonférentiel en spirale d'un composant multicouche.

Les inventeurs se sont donnés pour objectif d'améliorer l'endurance d'un pneumatique pour véhicule agricole comprenant une armature de travail qui est constituée d'au moins deux couches de travail.

Cet objectif a été atteint par un pneumatique pour véhicule agricole comprenant une armature de travail, radialement intérieure à une bande de roulement et radialement extérieure à une armature de carcasse :
- l'armature de travail comprenant un composant multicouche constitué par un empilement radial d'au moins deux couches de travail ;
- chaque couche de travail du composant multicouche s'étendant circonférentiellement à partir d'une première extrémité circonférentielle jusqu'à une deuxième extrémité circonférentielle et étant constituée de renforts enrobés dans un mélange élastomérique, parallèles entre eux et orientés selon un angle (A1, A2) relativement à une direction circonférentielle (XX') tangente à la bande de roulement ;
- l'armature de travail étant constituée par un enroulement circonférentiel en spirale d'au moins un tour du composant multicouche autour de l'armature de carcasse;
- les première et deuxième extrémités circonférentielles de chaque couche de travail étant décalées circonférentiellement l'une par rapport à l'autre d'un angle (B1, B2) ;
- les premières extrémités circonférentielles respectives de deux couches de travail consécutives étant décalées circonférentiellement l'une par rapport à l'autre d'un angle C1 ; et
- les premières et deuxièmes extrémités circonférentielles de l'ensemble des couches de travail sont distribuées dans la direction circonférentielle suivant des positions équi-réparties sur un tour.

L'idée principale de l'invention est de supprimer les soudures des couches de travail qui sont à l'origine de la non-uniformité et des singularités mécaniques, en enroulant de façon continue, en spirale, un empilement multicouches autour de l'armature de carcasse. Par ailleurs, les extrémités des couches de travail de l'empilement sont décalées circonférentiellement les unes par rapport aux autres, ce qui permet de répartir la masse de l'armature de travail plus régulièrement sur la circonférence du pneumatique et donc d'obtenir une uniformité satisfaisante, et par conséquent une endurance satisfaisante.

Deux options de pose sont possibles. La première option de pose consiste à alimenter un tambour cylindrique dit de finition avec plusieurs rouleaux contenant chacun une couche composite et, par un procédé de complexage, de poser simultanément toutes les couches en spirale. La deuxième option de pose consiste, avant l'étape dite de finition du pneumatique, destinée à poser le sommet du pneumatique radialement à l'extérieur de l'armature de carcasse, de préparer séparément, puis de stocker l'empilement multicouche qui est ensuite posé en spirale. Dans le cas particulier d'un empilement de deux couches, il faut donc trois tours de pose pour obtenir un sommet de six couches sans aucune soudure.

Les première et deuxième extrémités circonférentielles de chaque couche de travail du composant multicouche sont décalées circonférentiellement l'une par rapport à l'autre d'un angle (B1, B2).

L'effet technique de cette caractéristique est d'éviter la coïncidence des extrémités circonférentielles des couches de travail pour répartir dans la direction circonférentielle les singularités mécaniques. L'extrémité circonférentielle d'une couche composite se caractérise en effet par des contraintes nulles dans les renforts, et des déformations importantes. Eviter la superposition d'extrémités circonférentielles permet d'éviter la concentration de déformations importantes qui pourraient entrainer des amorces de fissures.

Les premières extrémités circonférentielles respectives de deux couches de travail consécutives étant décalées circonférentiellement l'une par rapport à l'autre d'un angle C1.

L'angle C1 représente le décalage angulaire de l'extrémité de départ de la première couche avec l'extrémité de départ de la deuxième couche. Le procédé de fabrication du sommet impose de couper les couches de travail au moins en début et en fin de pose. La coupe de la couche de travail se fait suivant un angle D avec la direction circonférentielle XX'. Dans le cas le plus général, l'angle de coupe peut être différent d'une couche de travail à l'autre. Les inventeurs ont observé que l'enroulement en spirale autour de l'armature de carcasse doit d'abord commencer par un ancrage du biseau que forme l'extrémité circonférentielle de la couche de travail coupée, avant de commencer l'enroulement de la couche suivante. Autrement dit, la pose de la deuxième couche se fait avec un certain retard par rapport à la première couche. La valeur du décalage est un compromis car il faut à la fois éloigner les singularités mécaniques dues à la coupe de la couche de travail, et en même temps il faut limiter la taille du secteur angulaire comprenant une couche de travail en moins.

Selon un mode de réalisation avantageux de l'invention, les première et deuxième extrémités circonférentielles de chaque couche de travail du composant multicouche sont décalées circonférentiellement l'une par rapport à l'autre, en formant entre elles, dans un plan équatorial du pneumatique, un angle au moins égal à 38°.

La valeur de l'angle entre les extrémités circonférentielles de départ et d'arrivée d'une même couche de travail est un paramètre de mise au point de l'invention qui dépend, en particulier, du rayon de pose du composant multicouche, et du nombre de tours sélectionné. Pour une dimension de pneumatique avec une jante de diamètre nominal de 16 pouces, et pour un enroulement de trois tours autour de l'armature de carcasse, les inventeurs ont observé qu'un espacement entre les extrémités de départ et d'arrivée correspondant à un angle de 38° permet un bon fonctionnement de l'invention.

Selon un autre mode de réalisation de l'invention, les première et deuxième extrémités circonférentielles de chaque couche de travail sont décalées circonférentiellement l'une par rapport à l'autre, en formant entre elles, dans un plan équatorial du pneumatique, un angle identique pour chaque couche de travail.

Dans un mode de réalisation simplifié de l'invention, le décalage de départ et d'arrivée de chaque couche pourrait ainsi être identique.

Selon l'invention les premières extrémités circonférentielles respectives de deux couches de travail consécutives sont décalées circonférentiellement l'une par rapport à l'autre d'une distance au moins égale au produit de la largeur axiale maximale des couches de travail par la cotangente de l'angle de coupe de ladite couche de travail.

L'enroulement des couches de travail doit être réalisé de manière à ce que les extrémités de départ de deux couches de travail consécutives, en contact l'une avec l'autre radialement, ne soient pas en coïncidence ni au début ni en fin de pose après le nombre de tours d'enroulement sélectionné. La valeur du décalage des deux couches de travail est fixée lors de la mise au point du procédé. Elle dépend de l'angle de coupe, et de la largeur axiale des couches de travail. Typiquement, pour une dimension de désignation normalisée650/65 R38 157D, avec les couches de travail coupées selon un angle de coupe égal à 30°, le décalage est au minimum de 224 mm.

La valeur de l'angle C1 dépend de l'angle de coupe de la couche de travail, du rayon de pose et de la largeur de la couche de travail. Pour la robustesse de la solution, les inventeurs propose que le décalage, mesuré en distance dans la direction circonférentielle, doit être au moins égale au produit de la cotangente de l'angle de coupe par la largeur de la couche de travail. L'angle C1 se déduit simplement par la connaissance du rayon de pose de la couche de travail.

Toujours selon l'invention, les premières extrémités circonférentielles respectives de deux couches de travail consécutives sont décalées circonférentiellement l'une par rapport à l'autre, en formant entre elles, dans un plan équatorial XZ du pneumatique, un angle C1 identique pour chaque couple de deux couches de travail consécutives.

Dans ce mode de réalisation avantageux de l'invention, le décalage des extrémités circonférentielles des couches de l'empilement est constant. En effet le composant multicouche peut être constitué de plus de deux couches. Et donc, par facilité de mise en œuvre, on peut avoir un décalage constant entre les extrémités circonférentielles des couches, non nécessairement équi-réparti.

Suivant l'invention, les premières et deuxièmes extrémités circonférentielles de l'ensemble des couches de travail sont équi-réparties circonférentiellement.

Ce mode de réalisation est un cas particulier de décalage constant. Les extrémités circonférentielles des couches de l'empilement sont distribuées dans la direction circonférentielle suivant des positions équi-réparties sur un tour. Si, par exemple, l'empilement contient p couches, l'angle C1 est égal à 2^{∗}π/p (n=3.1416).

Les premières et deuxièmes extrémités circonférentielles de l'ensemble des couches de travail forment, par rapport à la direction circonférentielle XX', un angle D au moins égal à 30°.

En réalité, l'angle D correspond à l'angle de coupe des couches de travail en début et en fin de pose. Cette coupe oblique sectionne les renforts et l'extrémité de la couche de travail prend une forme de biseau. En début de pose, l'enroulement en spirale de chaque couche de travail commence par un ancrage du biseau formé par la coupe. L'orientation oblique de la coupure de la couche de travail par rapport à la direction circonférentielle répond à la nécessité d'éviter de concentrer les extrémités des renforts dans un même plan méridien. Aux extrémités des renforts, les déformations du mélange élastomérique d'enrobage sont maximales en amplitude et peuvent entraîner des fissurations à la fois dans le plan méridien, entraînant une séparation des couches de travail dans la direction axiale, et également des fissurations dans la direction circonférentielle le long des renforts. Par exemple, la section de la couche est orientée de manière à faire un angle de 30° par rapport à la direction circonférentielle. Pour des raisons de facilité de mise en œuvre, l'angle de coupe des couches de travail peut être choisi parallèle à la direction des renforts.

Les renforts de chaque couche de travail forment un angle (A1, A2) au moins égal à 10° et au plus égal à 40° relativement à la direction circonférentielle XX'.

Les renforts de chaque couche de travail forment un angle (A1, A2) relativement à la direction circonférentielle XX', identique pour chaque couche de travail.

Les renforts respectifs de deux couches de travail consécutives sont croisés d'une couche de travail à la suivante.

Un des avantages de l'invention est de pourvoir constituer un empilement avec des couches dont les propriétés mécaniques sont différentes. Les angles que font les renforts avec la direction circonférentielle sont au moins égaux à 10° et plus égaux à 40°, et ils peuvent être différents d'une couche à l'autre. Dans un mode de réalisation préféré, les angles sont opposés d'une couche à la suivante (empilement croisé).

Selon un mode de réalisation préféré de l'invention, les renforts des couches de travail sont constitués par des câbles textiles.

Selon un autre mode de réalisation de l'invention les renforts de couches de travail sont des câbles métalliques constitués par au moins un fil en acier.

Un mode de réalisation préféré de l'invention est d'avoir un enroulement en spirale d'un empilement de couches composites renforcées avec des câbles en textile, mais de façon alternative, un tel empilement peut être réalisé de la même façon quelle que soit la nature des renforts, y compris avec des renforts métalliques.

Chaque couche de travail renforcé avec des renforts textiles a une épaisseur radiale au plus égale à 1.5 mm.

Les couches de travail avec des renforts textiles ont une épaisseur radiale d'environ 1.5 mm, mais, avec des renforts métalliques, qui ont un diamètre plus gros, l'épaisseur de la couche peut être sensiblement supérieure.

Le procédé de fabrication du pneumatique comprend une étape d'enroulement circonférentiel en spirale du composant multicouche constituant l'armature de travail, radialement à l'extérieur de l'armature de carcasse.

Selon une première variante de réalisation de l'invention, le procédé de fabrication du pneumatique comprend une étape de fabrication du composant multicouche par complexage des couches de travail en amont de l'étape d'enroulement circonférentiel en spirale du composant multicouches.

Dans cette option, une première étape consiste en la préparation de l'empilement multicouche qui se fait en amont de l'étape d'enroulement circonférentiel en spirale du composant multicouches. Les couches sont découpées à la longueur désirée, puis empilées successivement en appliquant les décalages voulus, et stockées sur un rouleau. Une deuxième étape de ce procédé consiste à poser par enroulement l'empilement de couches de travail ainsi réalisé radialement à l'extérieur de l'armature de carcasse.

Selon une deuxième variante de réalisation de l'invention, le procédé de fabrication du pneumatique comprend une étape de fabrication du composant multicouche par complexage des couches de travail intégrée à une étape d'enroulement circonférentiel en spirale du composant multicouche.

Dans cette option, l'assemblage de finition du pneumatique est alimenté par un dispositif comprenant autant de rouleaux d'alimentation que de couches dans l'empilement. Chaque couche est stockée sur un rouleau, et l'enroulement se fait sur l'armature carcasse par complexage en gérant le débit de chaque rouleau de manière à produire les décalages des couches.

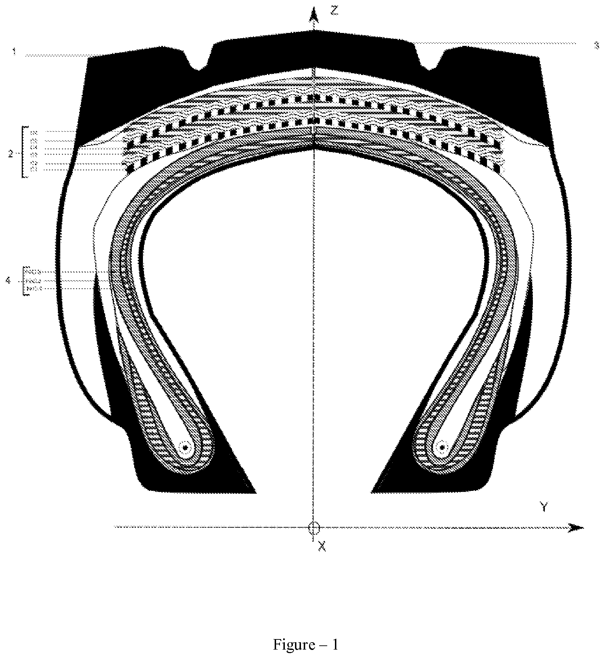

L'invention est illustrée par les figures 1 à 3, non représentées à l'échelle pour en faciliter la compréhension.

La figure 1 présente une coupe méridienne d'un pneumatique selon l'invention comprenant :
- Une bande de roulement 1 destinée à être en contact avec le sol ;
- Une armature de travail 2 radialement intérieur à la bande de roulement 1, constituée d'un empilement de six couches de travail C₁ à C₆. Chaque couche de travail a ses propres propriétés mécaniques tel que l'angle des renforts par rapport à la direction circonférentielle XX'. Cet empilement de couches est obtenu par l'enroulement en spirale d'un composant multicouche de couches de travail radialement à l'extérieur de l'armature de carcasse 4, comprenant trois couches de carcasse radiale NC₁, NC₂, et NC₃.

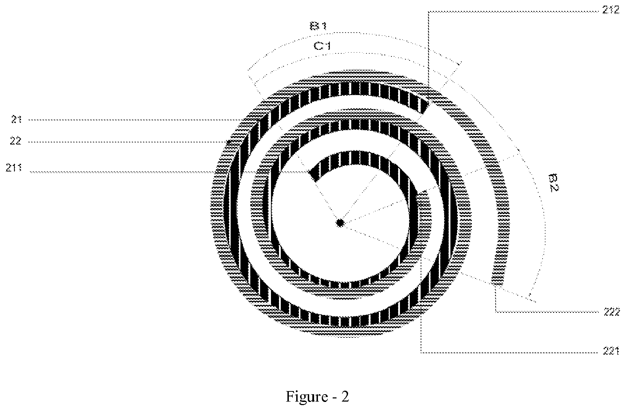

La figure 2 est une coupe circonférentielle dans le plan équatorial (XZ), représentant le composant multicouche formé de deux couches de travail, avant enroulement sur l'armature de carcasse. Pour obtenir le sommet de la figure 1, il faut donc, lors de la phase d'assemblage du pneumatique, procéder à un enroulement de trois tours autour du tambour de finition :
- La première couche de travail 21 radialement intérieure est délimitée circonférentiellement par son extrémité de départ ou première extrémité circonférentielle 211, et son extrémité d'arrivée ou deuxième extrémité circonférentielles 212. L'angle B1 est formé entre ces extrémités de départ 211 et d'arrivée 212;
- La seconde couche de travail 22 est posée avec un décalage circonférentiel radialement à l'extérieur de première couche de travail, depuis son extrémité de départ ou première extrémité circonférentielle 221 jusqu'à son extrémité d'arrivée ou deuxième extrémité circonférentielles 222. L'extrémité de départ 211 de la première couche de travail 21 et l'extrémité de départ 221 de la seconde couche de travail 22 forment entre elles un angle C₁. De la même façon l'extrémité d'arrivée 212 de la première couche de travail 21 et l'extrémité d'arrivée 222 de la seconde couche de travail 22 forment entre elles un angle C₂.

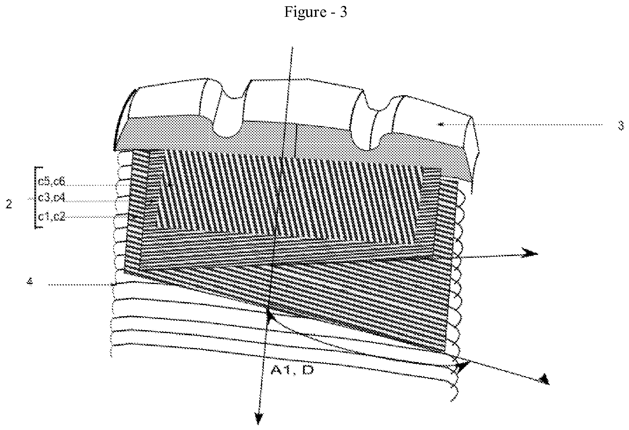

La figure 3 représente une vue en écorché du sommet du pneumatique représentant :
- une bande de roulement 1 destinée à être en contact avec le sol ;
- une armature de travail 2 avec un empilement de six couches de travail C₁ à C₆.

Dans le cas représenté sur la figure 3, les couches de travail sont regroupées par paires de même longueur (C₁, C₂ ; C₃, C₄ ; C₅, C₆), et donc seulement trois couches sont représentées ;
- une armature de carcasse 4 avec trois couches carcasses orientées chacune avec un angle de 90° par rapport à la direction circonférentielle (XX').

L'invention a été plus particulièrement étudiée pour un pneumatique radial pour véhicule agricole, de dimension 650/65 R38 157D. Selon la norme ETRTO, ce pneumatique peut porter une charge d'indice 157 qui correspond à une masse 4125 kg, et peut être soumis à une vitesse maximale d'indice D soit de 65km/h, pour une pression nominale de 160 kPa.

Il est connu que du seul fait du profil radial de ce pneumatique, la mise sous pression à 160 kPa génèrent des tensions réparties circonférentielles et méridiennes. Il faut déterminer les renforts de manière à récupérer ces tensions réparties majorées par un coefficient de sécurité.

Les inventeurs ont examiné les renforts définis dans le tableau 1 suivant :

**Tableau 1**

| | **Renfort N°1** | **Renfort N°2** | **Renfort N°3** | **Renfort N°4** |
|---|---|---|---|---|
| **Désignation** | PET J144/2⁽¹⁾ | PET J220/2 | PET J334/2 | R244/3⁽²⁾ |
| **Titre (tex)** | 144 | 220 | 334 | 244 |
| **Assemblage** | 144/2 | 220/2 | 334/2 | 244/3 |
| **Torsion (t/m)** | 290/290 | 240/240 | 270/270 | 330/330 |
| **Angle d'hélice (°)** | 18,4 | 18,8 | 25,2 | 28,9 |
| **Force rupture (daN)** | 18,5 | 28,5 | 40 | 28 |
| **Contraction standard** | 0,80% | 0,80% | 0,90% | / |
| **Ténacité (cN/tex)** | 60,3 | 57,9 | 53,3 | 35,2 |
| **Module élastique (allongement à 7daN)** | 5,20% | 4,50% | 2,60% | 2,70% |
| **Adhésion (pull out) force arrachage ⁽³⁾ N/fil** | 76 | 86 | 92 | 105 |
| **HMLS** | oui | oui | oui | NA |
| **Nature du fil** | Polyester | Polyester | Polyester | Rayonne |

| | | | | |
|---|---|---|---|---|
| *(1) la lettre J indique un polyester téréphtalate (PET) HMLS (High Modulus Low Shrinkage), à haut module et à faible contraction standard ;* *(2) la lettre R indique un câble en Rayonne.* *(3) Test d'arrachage tel que décrit dans le paragraphe [0017].* | | | | |

Les inventeurs ont résumé, dans le tableau 1, les caractéristiques physiques et les propriétés mécaniques associées à quatre choix de renforts. Les trois premiers exemples de renforts sont en polyester HMLS avec un titre respectif de 144 tex, 220 tex, et 334 tex. Le quatrième exemple de renfort est en rayonne avec un titre de 244 tex. Les trois premiers exemples de renforts sont des câbles obtenus par retordage de deux filés de filaments dont les torsions en tour par mètre sont indiquées dans le tableau. Le quatrième renfort en rayonne est obtenu par retordage de trois filés de filaments de 334 tex chacun à 330 tours par mètre.

Les inventeurs ont montré que, pour un bon fonctionnement de l'invention, la ténacité des renforts textiles en polyester doit être supérieure à 60 cN/tex, et que la ténacité des renforts en rayonne doit être supérieure ou égale à 35 cN/tex. Les câbles en textiles doivent être suffisamment résistants pour subir toutes les étapes du procédé de fabrication du pneumatique notamment les phases de conformation, au cours desquelles ils subissent de grandes déformations sans être endommagés.

Les renforts textiles thermosensibles en PET ont une contraction standard comprise entre 0.8% et 1%. Les torsions appliquées aux filés en polyester ont une amplitude supérieure à 240 tours par mètre et inférieure à 270 tours par mètre. L'angle d'hélice lors de l'application de la torsion autour de l'axe du filé est en amplitude inférieure ou égale à 25.2 °.

Les renforts ont des propriétés d'adhésion qui se traduisent par des résultats au test de d'arrachage compris entre 76 Newtons par fil et 92 Newtons par fil pour les câbles en polyester, en rayonne la force d'arrachage est égale à 105 Newtons par fil.

Le module sécant des renforts textiles à 7% de déformation sont compris dans l'intervalle de 2.6 daN/mm² à 5.2 daN/mm².

Les mélanges d'enrobage sont des compositions de mélanges comme définies dans le tableau 2 ci-dessous :

**Tableau 2**

| **Constituans** | **Pour cent d'élastomaére (pce)** |
|---|---|
| **Caoutchouc Naturel** | 40 |
| **SBR Ref 1 (1)** | 25 |
| **SBR Ref 2 (2)** | 35 |
| **Noir de carbone N550 (3)** | 60 |
| **Huile (4)** | 2 |
| **Résine Tackifiante (5)** | 5 |
| **Oxyde de zinc** | 3 |
| **Acide stéarique** | 1.5 |
| **Antioxydant 1 (6)** | 1.5 |
| **Antioxydant 2 (7)** | 1 |
| **Soufre** | 2 |
| **Sulfénamide (8)** | 0.5 |

| | |
|---|---|
| *1. : SBR Solution de Tg -48°C,* % *Styrène 27,* % *Vinyl 24,* % *Trans 46* *2. : SBR Solution de Tg -54°C,* % *Styrène 26,* % *Vinyl 24,* % *Trans 47* *3. : Noir de carbone N550* *4. : Huile de type MES* *5. : Résine tackifiante de type TAC OPF* *6. : Anti-oxydant de type phénylenediamine* *7. : Anti-oxydant de type Acétone aniline (TMQ)* *8. : sulfénamide de type tertio-butyl benzothiazol sulfnémide (TBBS)* | |

A partir des renforts et du mélange d'enrobage ci-dessus décrits dans les tableaux 1 et 2 ci-dessus, les inventeurs ont défini les couches de travail suivantes pour étudier la combinaison optimale pour le bon fonctionnement de l'invention :

**Tableau 3**

| Exemples | Nature⁽²⁾ | Renfort⁽³⁾ | Torsion⁽⁴⁾ | Epaisseur totale | Densité⁽¹⁾ | Tension de rupture |
|---|---|---|---|---|---|---|
| Exemple 1 | J | J 220/2 | 240/240 | 1,4 mm | 87f/dm | 24.8 daN/mm |
| Exemple 2 | J | J 144/2 | 290/290 | 0,97 mm | 104f/dm | 19.2 daN/mm |
| Exemple 3 | J | J 144/2 | 290/290 | 0,97 mm | 90f/dm | 16.6 daN/mm |
| Exemple 4 | R | R 244/3 | 330/330 | 1,25 mm | 79f/dm | 31.6 daN/mm |
| Exemple 5 | J | J 334/2 | 270/270 | 1,44 mm | 74f/dm | 20.7 daN/mm |

| | | | | | | |
|---|---|---|---|---|---|---|
| *1. La densité est le nombre de fils par décimètre (f*/*dm)* *2. Nature des renforts : J pour PET HMLS, et R pour rayonne* *3. Assemblage des torons pour obtenir des câbles. Exemple : J144*/*2 signifie un câble constitué de l'assemblage de deux torons de 144 tex chacun* *4. Torsion appliquée aux torons (en tours par mètre) pour obtenir le câble.* | | | | | | |

Les inventeurs ont retenu l'exemple 1 pour réaliser l'armature de travail du pneumatique. Ce choix représente le meilleur compromis technique et économique. L'armature de travail comprend donc six couches de travail renforcées avec des renforts textiles PET de type J220/2. Chaque couche de travail a une densité de 87 renforts par décimètre. Le mélange d'enrobage est celui décrit dans le tableau 2.

L'empilement des six couches travail est obtenu par trois tours d'enroulement en spirale du composant multicouches constitué de deux couches de travail, tel que représenté sur la figure 2, radialement à l'extérieur de l'armature de carcasse.

Les tests permettant de quantifier les performances d'un pneumatique selon l'invention sont relatifs à l'endurance ainsi qu'au coût de revient industriel.

En prenant comme référence, un pneumatique fabriqué de façon classique avec six couches textiles posées successivement, chacune comprenant une soudure qui s'étale sur une longueur de recouvrement de 8mm, on obtient les résultats du tableau 4 suivants, par rapport à une référence en base 100 :

**Tableau 4**

| | **Endurance (Heures de roulage)** | **Coût de revient industriel** |
|---|---|---|
| **Couches de travail avec soudures (Référence)** | 100 | 100 |
| **Couches de travail sans soudures (Invention)** | 131 | 91 |

Le résultat d'endurance a été obtenu suivant le test décrit au paragraphe [022]. Le pneumatique de l'invention a une durée de roulage augmentée de plus de 31% par rapport à la référence. De plus le nouveau procédé de pose en colimaçon a un temps de cycle diminué de 9 % par rapport au procédé classique de pose des couches avec une soudure pour chaque couche.

Le pneumatique de l'invention a des performances supérieures à celle du pneumatique de référence et répond donc à l'objectif initial des inventeurs.

## Revendications

1. Pneumatique (1) pour véhicule agricole comprenant une armature de travail (2), radialement intérieure à une bande de roulement (3) et radialement extérieure à une armature de carcasse (4) :
- l'armature de travail (2) comprenant un composant multicouche constitué par un empilement radial d'au moins deux couches de travail (21, 22) ;
- chaque couche de travail (21, 22) du composant multicouche s'étendant circonférentiellement à partir d'une première extrémité circonférentielle (211, 221) jusqu'à une deuxième extrémité circonférentielle (212, 222) et étant constituée de renforts enrobés dans un mélange élastomérique, parallèles entre eux et orientés selon un angle (A1, A2) relativement à une direction circonférentielle (XX') tangente à la bande de roulement (3) ;
- l'armature de travail (2) étant constituée par un enroulement circonférentiel en spirale d'au moins un tour du composant multicouche autour de l'armature de carcasse, les première et deuxième extrémités circonférentielles (211, 221 ; 212, 222) de chaque couche de travail (21, 22) du composant multicouche sont décalées circonférentiellement l'une par rapport à l'autre d'un angle (B1, B2) ;
- les premières extrémités circonférentielles (211, 221) respectives de deux couches de travail (21, 22) consécutives du composant multicouche étant décalées circonférentiellement l'une par rapport à l'autre d'un angle C1, **caractérisé en ce que** les premières et deuxièmes extrémités circonférentielles (211, 221 ; 212, 222) de l'ensemble des couches de travail (21, 22) sont distribuées dans la direction circonférentielle suivant des positions équi-réparties sur un tour.

2. Pneumatique selon la revendication 1, **dans lequel** les première et deuxième extrémités circonférentielles (211, 221 ; 212, 222) de chaque couche de travail (21, 22) du composant multicouche sont décalées circonférentiellement l'une par rapport à l'autre d'un angle (B1, B2) au moins égal à 38°.

3. Pneumatique selon l'une des revendications 1 ou 2, **dans lequel** les première et deuxième extrémités circonférentielles (211, 221 ; 212, 222) de chaque couche de travail (21, 22) sont décalées circonférentiellement l'une par rapport à l'autre d'un angle (B1, B2) identique pour chaque couche de travail (21, 22).

4. Pneumatique selon l'une quelconque des revendications 1 à 3, **dans lequel** les premières extrémités circonférentielles (211, 221) respectives de deux couches de travail (21, 22) consécutives sont décalées circonférentiellement l'une par rapport à l'autre d'une distance au moins égale au produit de la largeur axiale maximale des couches de travail par la cotangente de l'angle de coupe de ladite couche de travail.

5. Pneumatique selon l'une quelconque des revendications 1 à 4, **dans lequel** les premières extrémités circonférentielles (211, 221) respectives de deux couches de travail (21, 22) consécutives sont décalées circonférentiellement l'une par rapport à l'autre d'un angle (C1) identique pour chaque couple de deux couches de travail (21, 22) consécutives.

6. Pneumatique selon l'une quelconque des revendications 1 à 5, **dans lequel** les premières et deuxièmes extrémités circonférentielles (211, 221 ; 212, 222) de l'ensemble des couches de travail (21, 22) forment, par rapport à la direction circonférentielle (XX'), un angle (D) au moins égal à 30°.

7. Pneumatique selon l'une quelconque des revendications 1 à 6, **dans lequel** les renforts de chaque couche de travail (21, 22) forment un angle (A1, A2) au moins égal à 10° et au plus égal à 40° relativement à la direction circonférentielle (XX').

8. Pneumatique selon l'une quelconque des revendications 1 à 7, **dans lequel** les renforts de chaque couche de travail (21, 22) forment un angle (A1, A2) relativement à la direction circonférentielle (XX'), identique pour chaque couche de travail (21, 22).

9. Pneumatique selon l'une quelconque des revendications 1 à 8, **dans lequel** les renforts respectifs de deux couches de travail (21, 22) consécutives (21, 22) sont croisés d'une couche de travail à la suivante.

10. Pneumatique selon l'une quelconque des revendications 1 à 9, **dans lequel** les renforts de couches de travail (21, 22) sont constitués par des filés de filaments textiles.

11. Pneumatique selon l'une quelconque des revendications 1 à 9, **dans lequel** les renforts de couches de travail (21, 22) sont des câbles métalliques constitués par au moins un fil en acier.

12. Pneumatique selon l'une quelconque des revendications 1 à 10, **dans lequel** chaque couche de travail (21, 22), renforcée avec des renforts textiles, a une épaisseur radiale au plus égale à 1.5 mm.

## Patentansprüche

1. Reifen (1) für ein landwirtschaftliches Fahrzeug, welcher eine Arbeitsbewehrung (2) umfasst, die radial innerhalb eines Laufstreifens (3) und radial außerhalb einer Karkassenbewehrung (4) angeordnet ist;
- wobei die Arbeitsbewehrung (2) einen mehrschichtigen Bestandteil umfasst, der aus einem radialen Stapel aus wenigstens zwei Arbeitsschichten (21, 22) besteht;
- wobei sich jede Arbeitsschicht (21, 22) des mehrschichtigen Bestandteils in Umfangsrichtung von einem ersten Umfangsende (211, 221) bis zu einem zweiten Umfangsende (212, 222) erstreckt und aus in eine Elastomermischung eingebetteten Festigkeitsträgern besteht, die zueinander parallel sind und in einem Winkel (A1, A2) bezüglich einer zu dem Laufstreifen (3) tangentialen Umfangsrichtung (XX') ausgerichtet sind;
- wobei die Arbeitsbewehrung (2) aus einer spiralförmigen Umfangswicklung aus wenigstens einer Windung des mehrschichtigen Bestandteils um die Karkassenbewehrung besteht, wobei das erste und das zweite Umfangsende (211, 221; 212, 222) jeder Arbeitsschicht (21, 22) des mehrschichtigen Bestandteils in Umfangsrichtung um einen Winkel (B1, B2) zueinander versetzt sind;
- wobei die jeweiligen ersten Umfangsenden (211, 221) zweier aufeinander folgender Arbeitsschichten (21, 22) des mehrschichtigen Bestandteils in Umfangsrichtung um einen Winkel C1 zueinander versetzt sind,
**dadurch gekennzeichnet, dass** die ersten und zweiten Umfangsenden (211, 221; 212, 222) der Anordnung der Arbeitsschichten (21, 22) in der Umfangsrichtung auf Positionen verteilt sind, die auf einer Windung gleichmäßig verteilt sind.

2. Reifen nach Anspruch 1, wobei das erste und das zweite Umfangsende (211, 221; 212, 222) jeder Arbeitsschicht (21, 22) des mehrschichtigen Bestandteils in Umfangsrichtung um einen Winkel (B1, B2) zueinander versetzt sind, der mindestens 38° beträgt.

3. Reifen nach einem der Ansprüche 1 oder 2, wobei das erste und das zweite Umfangsende (211, 221; 212, 222) jeder Arbeitsschicht (21, 22) in Umfangsrichtung um einen Winkel (B1, B2) zueinander versetzt sind, der für alle Arbeitsschichten (21, 22) identisch ist.

4. Reifen nach einem der Ansprüche 1 bis 3, wobei die jeweiligen ersten Umfangsenden (211, 221) zweier aufeinander folgender Arbeitsschichten (21, 22) in Umfangsrichtung um einen Abstand zueinander versetzt sind, der wenigstens gleich dem Produkt der maximalen axialen Breite der Arbeitsschichten mit dem Kotangens des Schnittwinkels der Arbeitsschicht ist.

5. Reifen nach einem der Ansprüche 1 bis 4, wobei die jeweiligen ersten Umfangsenden (211, 221) zweier aufeinander folgender Arbeitsschichten (21, 22) in Umfangsrichtung um einen Winkel (C1) zueinander versetzt sind, der für alle Paare von zwei aufeinander folgenden Arbeitsschichten (21, 22) identisch ist.

6. Reifen nach einem der Ansprüche 1 bis 5, wobei die ersten und zweiten Umfangsenden (211, 221; 212, 222) der Anordnung der Arbeitsschichten (21, 22) bezüglich der Umfangsrichtung (XX') einen Winkel (D) bilden, der mindestens 30° beträgt.

7. Reifen nach einem der Ansprüche 1 bis 6, wobei die Festigkeitsträger jeder Arbeitsschicht (21, 22) bezüglich der Umfangsrichtung (XX') einen Winkel (A1, A2) bilden, der mindestens 10° und höchstens 40° beträgt.

8. Reifen nach einem der Ansprüche 1 bis 7, wobei die Festigkeitsträger jeder Arbeitsschicht (21, 22) bezüglich der Umfangsrichtung (XX') einen Winkel (A1, A2) bilden, der für alle Arbeitsschichten (21, 22) identisch ist.

9. Reifen nach einem der Ansprüche 1 bis 8, wobei die jeweiligen Festigkeitsträger zweier aufeinander folgender (21, 22) Arbeitsschichten (21, 22) sich von einer Schicht zur anderen überkreuzen.

10. Reifen nach einem der Ansprüche 1 bis 9, wobei die Festigkeitsträger von Arbeitsschichten (21, 22) aus textilen Filamentgarnen bestehen.

11. Reifen nach einem der Ansprüche 1 bis 9, wobei die Festigkeitsträger von Arbeitsschichten (21, 22) Metallseile sind, die aus wenigstens einem Stahldraht bestehen.

12. Reifen nach einem der Ansprüche 1 bis 10, wobei jede mit textilen Festigkeitsträgern verstärkte Arbeitsschicht (21, 22) eine radiale Dicke aufweist, die höchstens 1,5 mm beträgt.

## Claims

1. Tyre (1) for an agricultural vehicle, comprising a working reinforcement (2), radially on the inside of a tread (3) and radially on the outside of a carcass reinforcement (4):
- the working reinforcement (2) comprising a multilayer component made up of a radial stack of at least two working layers (21, 22);
- each working layer (21, 22) of the multilayer component extending circumferentially from a first circumferential end (211, 221) to a second circumferential end (212, 222) and being made up of reinforcers that are coated in an elastomeric compound, are mutually parallel and are oriented at an angle (A1, A2) relative to a circumferential direction (XX') tangential to the tread (3);
- the working reinforcement (2) being made up of a circumferential spiral winding of at least one turn of the multilayer component about the carcass reinforcement, the first and second circumferential ends (211, 221; 212, 222) of each working layer (21, 22) of the multilayer component being circumferentially offset from one another by an angle (B1, B2);
- the respective first circumferential ends (211, 221) of two consecutive working layers (21, 22) of the multilayer component being circumferentially offset from one another by an angle C1, **characterized in that** the first and second circumferential ends (211, 221; 212, 222) of the set of working layers (21, 22) are distributed in the circumferential direction in positions that are regularly distributed over a turn.

2. Tyre according to Claim 1, **wherein** the first and second circumferential ends (211, 221; 212, 222) of each working layer (21, 22) of the multilayer component are circumferentially offset from one another by an angle (B1, B2) at least equal to 38°.

3. Tyre according to either of Claims 1 and 2, **wherein** the first and second circumferential ends (211, 221; 212, 222) of each working layer (21, 22) are circumferentially offset from one another by an identical angle (B1, B2) for each working layer (21, 22).

4. Tyre according to any one of Claims 1 to 3, **wherein** the respective first circumferential ends (211, 221) of two consecutive working layers (21, 22) are circumferentially offset from one another by a distance at least equal to the product of the maximum axial width of the working layers multiplied by the cotangent of the cutting angle of said working layer.

5. Tyre according to any one of Claims 1 to 4, **wherein** the respective first circumferential ends (211, 221) of two consecutive working layers (21, 22) are circumferentially offset from one another by an identical angle (C1) for each pair of two consecutive working layers (21, 22).

6. Tyre according to any one of Claims 1 to 5, **wherein** the first and second circumferential ends (211, 221; 212, 222) of the set of working layers (21, 22) form, with respect to the circumferential direction (XX'), an angle (D) at least equal to 30°.

7. Tyre according to any one of Claims 1 to 6, **wherein** the reinforcers of each working layer (21, 22) form an angle (A1, A2) at least equal to 10° and at most equal to 40° relative to the circumferential direction (XX').

8. Tyre according to any one of Claims 1 to 7, **wherein** the reinforcers of each working layer (21, 22) form an identical angle (A1, A2), relative to the circumferential direction (XX'), for each working layer (21, 22).

9. Tyre according to any one of Claims 1 to 8, **wherein** the respective reinforcers of two consecutive (21, 22) working layers (21, 22) are crossed from one working layer to the next.

10. Tyre according to any one of Claims 1 to 9, **wherein** the reinforcers of working layers (21, 22) are made up of spun textile filaments.

11. Tyre according to any one of Claims 1 to 9, **wherein** the reinforcers of working layers (21, 22) are metal cords made up of at least one steel thread.

12. Tyre according to any one of Claims 1 to 10, **wherein** each working layer (21, 22), reinforced with textile reinforcers, has a radial thickness at most equal to 1.5 mm.
